# EUROPÄISCHE PATENTSCHRIFT

(11) **EP 3 999 769 B1**
(45) Veröffentlichungstag und Bekanntmachung des Hinweises auf die Patenterteilung: **25.10.2023**
(21) Anmeldenummer: 20740011.0
(22) Anmeldetag: 16.07.2020
(51) Int. Cl.: F17C 5/00

(54) **ZAPFVENTIL FÜR GASFÖRMIGEN ODER VERFLÜSSIGTEN KRAFTSTOFF MIT VERZÖGERUNG ZWISCHEN KUPPLUNG UND AKTIVIERUNG**
DISPENSING NOZZLE FOR GASEOUS OR LIQUEFIED FUEL, WITH DELAY BETWEEN COUPLING AND ACTUATING
BUSE DE DISTRIBUTION DE CARBURANT GAZEUX OU LIQUÉFIÉ, AVEC RETARD ENTRE LE COUPLAGE ET L'ACTIONNEMENT

(30) Priorität: 16.07.2019 EP 19186456; 29.11.2019 DE 102019132411
(43) Veröffentlichungstag der Anmeldung: 25.05.2022
(73) Patentinhaber: Oasis Engineering (2003) Ltd, Tauranga 3110 (NZ)
(72) Erfinder: LEE, Jonathan Jefcoate, 3118 Papamoa (NZ); FISHER, William John, 3173 Oropi Tauranga (NZ)
(74) Vertreter: Glawe, Delfs, Moll
(86) Internationale Anmeldenummer: PCT/EP2020/070136
(87) Internationale Veröffentlichungsnummer: WO 2021/009283

(56) Entgegenhaltungen:
- EP-A1- 0 039 977
- EP-A2- 1 006 310
- WO-A1-2016/168739

## Beschreibung

Gegenstand der vorliegenden Erfindung ist ein Zapfventil zum Ausbringen eines Fluids in einen Tank. Das Zapfventil weist einen ersten mit einer Fluidzuleitung verbindbaren Fluidanschluss und einen zweiten mit einem Anschlussstutzen des Tanks verbindbaren Fluidanschluss auf. Ein Kanal des Zapfventils dient zur Durchleitung des Fluids vom ersten zum zweiten Fluidanschluss. Im Kanal ist ein Hauptventil angeordnet. Das Zapfventil umfasst zudem eine Kupplungseinrichtung zur Herstellung einer Verbindung zwischen dem Zapfventil und dem Anschlussstutzen sowie eine Betätigungsvorrichtung zur Betätigung der Kupplungseinrichtung und des Hauptventils. Die Betätigungsvorrichtung umfasst einen Handhebel, welcher zwischen eine Schließstellung und einer Öffnungsstellung bewegbar ist.

Solche Zapfventile kommen insbesondere bei der sogenannten Druckbetankung zum Einsatz, bei der zwischen einem Fluidreservoir und dem Tank ein geschlossenes System hergestellt wird, indem das Zapfventil im Wesentlichen fluiddicht mit dem Anschlussstutzen verbunden wird. Das Fluid kann dann mit relativem Überdruck in den Tank eingebracht werden, ohne dass es am Übergang zwischen Zapfventil und Anschlussstutzen zu einem Austreten des Fluids in die Umwelt kommen kann. Zapfventile dieser Art werden beispielsweise zum Ausbringen von Autogas (LPG), verdichtetem Erdgas (CNG), flüssigem Erdgas (LNG) oder auch zur Ausbringung von verflüssigtem Wasserstoff (H2) verwendet. Insbesondere für die Betankung von Kraftfahrzeugen ist es wünschenswert, dass die Zapfventile für den Benutzer leicht und insbesondere einhändig zu handhaben sind und bestenfalls in ihrer Benutzung vergleichbar sind mit gewöhnlichen Zapfventilen zur Ausbringung von Benzin oder Diesel, so dass keine Umgewöhnung stattfinden muss.

Aus den Dokumenten EP 1 690 037 B1 oder EP 1 883 766 B1 sind derartige Zapfventile grundsätzlich bekannt. Diese bekannten Zapfventile weisen einen mit dem Handhebel verbundenen Hebelmechanismus auf, welcher zur Betätigung sowohl einer Kupplungseinrichtung als auch eines Ventils eingerichtet ist. Der vorbekannte Hebelmechanismus umfasst dazu eine Mehrzahl von Hebelelementen, durch die eine auf den Handhebel ausgeübte Kraft umgesetzt wird, um die Kupplungseinrichtung und das Ventil im Wesentlichen gleichzeitig zu betätigen. Nachteilig an diesem Stand der Technik ist, dass bei einer gleichzeitigen Betätigung nicht immer die gewünschte Betankungssicherheit gewährleistet ist, da es beispielsweise zu einem Öffnen des Hauptventils kommen kann, bevor die Verbindung zum Anschlussstutzen sicher hergestellt ist. Zudem ist ein relativ großer Kraftaufwand zum Betätigen des Handhebels erforderlich, was die Handhabung erschwert. Darüber hinaus ist der bekannte Hebelmechanismus kleinteilig und damit verschleißanfällig und aufwändig in der Konstruktion.

Aus dem Dokument EP 0 039 977 ist ein Druckbetankungsventil bekannt, das der Benutzer mit einer Hand an einem Griffelement festhalten kann, wobei ein Betätigungshebel vorgehsehen ist, den der Benutzer mit der anderen Hand bedienen kann. Der Betätigungshebel ist über eine Mehrzahl von miteinander drehbar verbundenen Hebeelementen mit dem Hauptventil und mit einer Kupplungseinrichtung gekoppelt. Aus den Dokumenten WO 2016/168739 und EP 1 006 310 sind weitere Zapfventile der eingangs beschriebenen Art bekannt.

Ausgehend davon ist es die Aufgabe der vorliegenden Erfindung, ein Zapfventil der oben genannten Art bereitzustellen, welches eine einfachere und zuverlässigere Betätigung von Hauptventil und Kupplungseinrichtung ermöglich. Gelöst wie diese Aufgabe mit den Merkmalen des Anspruchs 1. Vorteilhafte Ausführungsformen sind in den Unteransprüchen angegeben.

Erfindungsgemäß ist vorgesehen, dass die Betätigungsvorrichtung dazu eingerichtet ist, eine Bewegung des Handhebels zwischen der Schließstellung und der Öffnungsstellung in eine zeitlich versetzte Betätigung der Kupplungseinrichtung und des Hauptventils umzuwandeln.

Zunächst werden einige im Rahmen der Erfindung verwendete Begriffe erläutert. Das Zapfventil kann mit einem Anschlussstutzen eines Tanks verbunden werden, beispielsweise indem der zweite Fluidanschluss auf den Anschlussstutzen aufgesetzt wird. Beim Verbinden wird vorzugsweise eine fluiddichte Verbindung zwischen dem Anschlussstutzen und dem zweiten Fluidanschluss hergestellt, wobei das Zapfventil weiter vorzugsweise zur Druckbetankung des Tanks ausgebildet ist. Bei den auszubringenden Fluiden kann es sich beispielsweise um LPG, LNG, CNG und/oder H2 handeln. Die Kupplungseinrichtung dient dazu, die Verbindung herzustellen, insbesondere kann die Kupplungseinrichtung zur Verriegelung des zweiten Fluidanschlusses am Anschlussstutzen dienen, um nach der Herstellung der Verbindung ein unbeabsichtigtes Lösen zu verhindern.

Die Betätigungsvorrichtung weist einen Handhebel auf. Der Handhebel dient zur Betätigung des Zapfventils und kann üblicherweise von einem Benutzer, welcher das Zapfventil in seiner Hand hält, mit Hilfe der Handkraft von einer Schließstellung in eine Öffnungsstellung bewegt werden, insbesondere indem der Handhebel mit Hilfe der Finger zum Handballen gezogen wird.

Die Schließstellung des Handhebels bezeichnet eine Stellung des Hebels (Ruhestellung), die mit einem geschlossenen Hauptventil korreliert ist. Durch eine Bewegung (vzw. Ziehen) des Handhebels in die Öffnungsstellung wird üblicherweise ein Betankungsvorgang ausgelöst, wobei dazu, wie im Rahmen der vorliegenden Offenbarung erläutert, die Kupplungseinrichtung und das Hauptventil betätigt werden können, um das Zapfventil an einen Anschlussstutzen zu kuppeln und das Hauptventil zu öffnen. Das Hauptventil ist allerdings nicht zwangsläufig geöffnet, wenn der Handhebel sich in der Öffnungsstellung befindet. Insbesondere kann eine aus dem Stand der Technik grundsätzlich bekannte automatische Sicherheitsabschaltung vorhanden sein, welche dazu eingerichtet ist, das Hauptventil unabhängig von der Stellung des Handhebels in eine Schließstellung zu bewegen. Eine solche Sicherheitsabschaltung ist beispielsweise aus der EP 2 386 520 A1 bekannt.

Der Bewegungsbereich des Handhebels weist erfindungsgemäß einen ersten Handhebelbereich und einen davon verschiedenen zweiten Handhebelbereich auf. Mit der Bezeichnung "erster" und "zweiter" soll keine Festlegung bezüglich der Anordnung der Bereiche relativ zur Schließ- und Öffnungsstellung einhergehen.

Mit Hilfe der Betätigungsvorrichtung kann das Hauptventil und die Kupplungseinrichtung betätigt werden. Eine Betätigung des Hauptventils kann beispielsweise das Öffnen und/oder Schließen des Hauptventils umfassen. Eine Betätigung der Kupplungseinrichtung kann insbesondere das Herstellen und/oder Lösen einer Verbindung bzw. das Herstellen und/oder Lösen der oben genannten Verriegelung zwischen dem zweiten Fluidanschluss und dem Anschlussstutzen umfassen. Eine Betätigung der Kupplungseinrichtung bzw. des Hauptventils kann auch darin liegen, dass Elemente der Betätigungsvorrichtung durch die Bewegung des Handhebels in Bewegung versetzt werden, um eine spätere Betätigung der Kupplungseinrichtung bzw. des Hauptventils zu ermöglichen.

Im Rahmen der Erfindung wurde erkannt, dass eine zeitlich versetzte Betätigung von Kupplungseinrichtung und Hauptventil die Benutzerfreundlichkeit und Betankungssicherheit deutlich erhöht. Einerseits kann dadurch sichergestellt werden, dass eine Betätigung des Hauptventils erst dann stattfindet, nachdem die Kupplungseinrichtung sicher betätigt wurde. Insbesondere kann also beispielsweise sichergestellt werden, dass das Hauptventil erst dann geöffnet wird, wenn die Verriegelung sicher hergestellt wurde oder dass die Verriegelung erst dann geöffnet wird, nachdem das Hauptventil sicher verschlossen wurde. Weiterhin wurde erkannt, dass bei einer zeitlich versetzten Betätigung die zu einem bestimmten Zeitpunkt auf den Handhebel ausgeübte Kraft im Wesentlichen vollständig in die jeweilige Betätigung der Kupplungseinrichtung bzw. des Hauptventils umgewandelt werden kann, wodurch die Handhabung erleichtert wird.

Erfindungsgemäß weist die Betätigungsvorrichtung ein mit dem Handhebel verbundenes Koppelgelenk auf, welches durch eine erste Wirkverbindung mit der Kupplungseinrichtung und durch eine zweite Wirkverbindung mit dem Hauptventil verbunden ist, wobei die Wirkverbindungen für das Koppelgelenk eine Führung bilden, so dass das Koppelgelenk bei einer Betätigung des Handhebels in einem ersten Handhebelbereich zu einer Drehung um eine erste Schwenkachse und/oder zu einer Verschiebung in eine erste Richtung veranlasst wird, und so dass das Koppelgelenk bei einer Betätigung des Handhebels in einem zweiten Handhebelbereich zu einer Verschiebung in eine zweite Richtung und/oder zu einer Drehung um eine zweite Schwenkachse veranlasst wird.

Das Koppelgelenk ist in dieser bevorzugten Ausführungsform einerseits mit dem Handhebel und andererseits über die beiden Wirkverbindungen mit der Kupplungseinrichtung und dem Hauptventil verbunden. Der Begriff "Wirkverbindung" umfasst grundsätzlich jede Art von Kopplung, die dazu geeignet ist, eine Bewegung des Koppelgelenks in eine Betätigung der Kupplungseinrichtung bzw. des Hauptventils zu überführen. Die Wirkverbindungen dienen zum einen zur Übertragung der auf Handhebel und Koppelgelenk ausgeübten Betätigungskraft auf die Kupplungseinrichtung bzw. das Hauptventil. Zum anderen bilden die Wirkverbindungen für das Koppelgelenk eine Führung und veranlassen das Koppelgelenk dadurch bei einer Betätigung des Handhebels im ersten bzw. zweiten Handhebelbereich zu einer Drehung um die erste bzw. zweite Schwenkachse und/oder zu einer Verschiebung in die erste bzw. zweite Richtung. Dies bedeutet, dass das Koppelgelenk bei einer Betätigung des Handhebels im jeweiligen Handhebelbereich entweder relativ zum Zapfventil um die jeweilige Schwenkachse gedreht wird, oder relativ zum Zapfventil in die jeweilige Richtung verschoben wird oder aber sowohl um die jeweilige Achse gedreht als auch in die jeweilige Richtung verschoben wird. Die erste Schwenkachse ist dabei von der zweiten Schwenkachse verschieden. Die erste Richtung ist von der zweiten Richtung verschieden. Wenn das Koppelgelenk bei einer Betätigung des Handhebels in einem der Handhebelbereiche sowohl verschoben als auch gedreht wird, kommt es aufgrund der Verschiebung zu einer Verlagerung der Schwenkachse. Solange die Schwenkachse dabei ihre Position relativ zum Koppelgelenk nicht verändert, wird die Drehung des Koppelgelenks im Rahmen der Erfindung als Drehung um eine erste Schwenkachse aufgefasst. Erst wenn sich die Position der Schwenkachse in Bezug auf das Koppelgelenk verändert, findet eine Drehung um eine andere Schwenkachse statt.

Es ist bevorzugt, dass das Koppelgelenk um jeweils genau eine erste bzw. genau eine zweite Schwenkachse drehbar ist. Grundsätzlich ist es im Rahmen der Erfindung aber auch möglich, dass das Koppelgelenk während der Betätigung des Handhebels im ersten Handhebelbereich um eine Mehrzahl erster Schwenkachsen gedreht wird und/oder in eine Mehrzahl von ersten Richtungen verschoben wird, wobei außerdem vorgesehen sein kann, dass das Koppelgelenk während der Betätigung des Handhebels im zweiten Handhebelbereich um eine Mehrzahl zweiter Schwenkachsen gedreht wird und/oder in eine Mehrzahl von zweiten Richtungen verschoben wird. Die Menge erster Schwenkachsen und die Menge zweiter Schwenkachsen sind dabei vorzugsweise disjunkt (also elementfremd). Die Menge erster Richtungen und die Menge zweiter Richtungen ist dabei ebenfalls vorzugsweise disjunkt.

Es wurde erkannt, dass durch die oben beschriebene Verwendung eines Koppelgelenks auf besonders effiziente Weise eine zeitlich versetzte Betätigung von Kupplungseinrichtung und Hauptventil ermöglicht. Insbesondere gegenüber den aus dem Stand der Technik bekannten Lösungen mit festen Schwenkachsen bietet diese Ausführungsform deutliche Vorteile. So kann die auf den Handhebel ausgeübte Kraft besonders effektiv beispielsweise zunächst beim Durchlaufen des ersten Handhebelbereichs in eine Betätigung der Kupplungseinrichtung und beim Durchlaufen des zweiten Handhebelbereichs in eine Betätigung des Hauptventils umgewandelt werden.

Dabei können die Wirkverbindungen so ausgebildet sein, dass die Drehung des Koppelgelenks um die erste Schwenkachse und/oder die Verschiebung des Koppelgelenks in die erste Richtung zumindest teilweise oder vollständig in eine Betätigung der Kupplungseinrichtung umgewandelt wird. Weiterhin können die Wirkverbindungen so ausgebildet sein, dass die Drehung des Koppelgelenks um die zweite Schwenkachse und/oder die Verschiebung des Koppelgelenks in die zweite Richtung zumindest teilweise oder vollständig in eine Betätigung des Hauptventils umgewandelt werden. Eine Bewegung des Handhebels im jeweiligen Handhebelbereich kann dadurch jeweils im Wesentlichen vollständig in die jeweilige Betätigung der Kupplungseinrichtung bzw. des Hauptventils umgesetzt werden. Im Unterschied dazu erfolgt bei der aus dem Stand der Technik bekannten Verwendung eines gewöhnlichen Hebelmechanismus eine im Wesentlichen gleichzeitige Betätigung von Kupplungseinrichtung und Hauptventil, so dass eine höhere Betätigungskraft aufgewendet werden muss.

Das Zapfventil kann Mittel zur Führung des Koppelgelenks relativ zu einem Gehäuse des Zapfventils aufweisen. Diese Mittel können zusätzlich oder alternativ zu den Wirkverbindungen eine Führung für eine Bewegung des Koppelgelenks relativ zu dem Gehäuse bilden. Die Mittel können einen am Gehäuse fixierten Führungsbolzen aufweisen, welcher in ein im Koppelgelenk ausgebildetes Langloch eingreift. Dadurch ist es beispielsweise möglich, dass das Koppelgelenk um eine durch den Führungsbolzen gebildete Achse schwenkbar ist oder entlang einer durch das Langloch vorgegebenen Richtung relativ zum Führungsbolzen verschiebbar ausgebildet ist.

In einer bevorzugten Ausführungsform weist zumindest eine der Wirkverbindungen ein Vermittlungselement auf, welches gelenkig mit dem Koppelgelenk verbunden ist. Vorzugsweise wird das Vermittlungselement durch eine Bewegung des Koppelgelenks zu einer Verschiebung relativ zum Zapfventil veranlasst. Zusätzlich oder alternativ kann das Vermittlungselement auch durch eine Bewegung des Koppelgelenks zu einer Drehung relativ zum Zapfventil veranlasst werden. Das Vermittlungselement kann dabei beispielsweise relativ zum Zapfventil linear verschiebbar sein oder drehbar am Zapfventil angelenkt sein. Es hat sich gezeigt, dass durch ein solches Vermittlungselement auf einfache und effiziente Weise eine Führung des Koppelgelenks relativ zum Zapfventil ermöglicht werden kann. Einerseits kann das Koppelgelenk relativ zum Vermittlungselement gedreht werden, so dass beispielsweise die Drehbarkeit des Koppelgelenks um eine der Schwenkachsen realisiert werden kann. Gleichzeitig kann durch die Verschiebbarkeit des Vermittlungselements die Verschiebbarkeit des Koppelgelenks in eine der Richtungen realisiert werden.

In einer bevorzugten Ausführungsform weisen beide Wirkverbindungen ein solches Vermittlungselement auf. Das der ersten Wirkverbindung zugehörige Vermittlungselement kann in diesem Fall beispielsweise die Drehbarkeit des Koppelgelenks um die erste Schwenkachse oder die Verschiebbarkeit des Koppelgelenks in die erste Richtung ermöglichen, wobei das zweite Vermittlungselement die Drehbarkeit um die zweite Schwenkachse bzw. die Verschiebbarkeit entlang der zweiten Richtung ermöglichen kann.

Es kann vorgesehen sein, dass das Vermittlungselement einen relativ zum Zapfventil linear verschiebbaren Betätigungsschlitten sowie ein Gelenkelement aufweist, welches das Koppelgelenk gelenkig mit dem Schlitten verbindet. Das Gelenkelement kann gelenkig am Schlitten und/oder gelenkig am Koppelgelenk befestigt sein.

In einer bevorzugten Ausführungsform weist das Zapfventil eine Einrichtung auf, die die Verschiebbarkeit und/oder Drehbarkeit des Vermittlungselements begrenzt, so dass das Vermittlungselement durch eine Bewegung des Koppelgelenks nur bis zu einer Endposition verschiebbar und/oder drehbar ist, wobei das Koppelgelenk vorzugsweise nach dem Erreichen der Endposition an einer weiteren Drehung um die erste oder zweite Schwenkachse und/oder an einer weiteren Verschiebung entlang der ersten oder zweiten Richtung gehindert wird. Die Einrichtung kann beispielsweise als Anschlagsfläche ausgebildet sein, an die das Vermittlungselement oder ein mit dem Vermittlungselement verbundenes Element anschlägt, so dass nach dem Anschlagen keine weitere Bewegung des Vermittlungselements mehr möglich ist. Vorzugsweise wird das Koppelgelenk, nachdem das Vermittlungselement die Endposition erreicht hat, an einer weiteren Drehung um die erste oder zweite Schwenkachse gehindert. Zusätzlich oder alternativ kann vorgesehen sein, dass das Koppelgelenk nach dem Erreichen der Endposition des Vermittlungselements an einer weiteren Verschiebung entlang der ersten oder zweiten Richtung gehindert wird. Die Verwendung einer solchen Einrichtung stellt eine vorteilhafte Möglichkeit dar, einen Übergang zwischen den verschiedenen Bewegungsarten des Koppelgelenks zu schaffen. Die die Verschiebbarkeit begrenzende Einrichtung kann insbesondere so angeordnet sein, dass das Erreichen der Endposition des Vermittlungselements mit dem Übergang des Handhebels vom ersten Handhebelbereich zum zweiten Handhebelbereich einhergeht.

In einer bevorzugten Ausführungsform ist das Vermittlungselement mit einem Rückstellelement verbunden, wobei das Rückstellelement eine Verschwenkung des Koppelelements um die erste oder zweite Schwenkachse fördert oder erschwert. Alternativ oder zusätzlich kann das Vermittlungselement mit einem Rückstellelement verbunden sein, wobei das Rückstellelement eine Verschiebung des Koppelgelenks in die erste oder zweite Richtungen fördert oder erschwert. Die Verwendung von Rückstellelementen kann ebenfalls dazu genutzt werden, einen Übergang zwischen den verschiedenen Bewegungsformen des Koppelgelenks zu ermöglichen. Wenn beispielsweise beide Wirkverbindungen ein durch ein Rückstellelement belastetes Vermittlungselement aufweisen, können die Rückstellkräfte so eingestellt sein, dass bei einer Bewegung des Handhebels im ersten Handhebelbereich zunächst eine erste Bewegungsart des Koppelgelenks stattfindet, wobei beim Übergang des Handhebels in den zweiten Handhebelbereich ein Übergang zur zweiten Bewegungsart stattfindet. Das Rückstellelement oder die Rückstellelemente können in einer vorteilhaften Ausführungsform dazu ausgebildet sein, das Hauptventil in seine Schließstellung zu drängen.

In einer Ausführungsform ist die Kupplungseinrichtung dazu ausgebildet, bei einer Verschiebung des zweiten Fluidanschlusses in Richtung des Anschlussstutzens eine automatische Verriegelung zwischen dem zweiten Fluidanschluss und dem Anschlussstutzen herzustellen, wobei vorzugsweise die Betätigungsvorrichtung dazu ausgebildet ist, bei einer Bewegung des Handhebels von der Öffnungsstellung in die Schließstellung zuerst das Hauptventil zu betätigen und anschließend die Verriegelung zwischen dem zweiten Fluidanschluss und dem Anschlussstutzen zu lösen. Bei dieser Ausgestaltung kann ein Benutzer das Zapfventil mit dem Anschlussstutzen verbinden, indem er den zweiten Fluidanschluss lediglich in etwa koaxial zum Anschlussstutzen anordnet und das Zapfventil anschließend in Richtung des Anschlussstutzens bewegt, ohne dass sonstige Handlungen vom Benutzer vorzunehmen sind (nachfolgend auch "automatische Verriegelung" genannt). Die Kupplungseinrichtung kann dazu insbesondere radial verschiebbare Verriegelungselemente aufweisen, welche zum Eingriff in eine Aussparung des Anschlussstutzens ausgebildet sind.

Im Unterschied dazu wird bei den aus EP 1 690 037 B1 oder EP 1 883 766 B1 bekannten Zapfventilen eine Verriegelung zwischen dem Zapfventil und dem Anschlussstutzen erst durch die Betätigung des Handhebels hergestellt. Dies erschwert die Bedienung des vorbekannten Zapfventils, da der Benutzer zwei Handlungen gleichzeitig vornehmen muss, nämlich die korrekte Anordnung des Fluidanschlusses auf dem Anschlussstutzen und gleichzeitig die Betätigung des Handhebels. Zwar ist die Verwendung einer "automatischen Verriegelung" an sich aus dem Stand der Technik bekannt. Allerdings war es bei Zapfventilen mit "automatischer Verriegelung" bisher nicht möglich, diese einhändig zu betätigen. Vielmehr musste die Verriegelung vom Benutzer, welcher das Zapfventil in seiner einen Hand hält, mittels der zweiten Hand gelöst werden. Erst die vorliegende Erfindung ermöglicht ein einhändiges Lösen der Verriegelung, indem durch die zeitversetzte Betätigung von Hauptventil und Kupplungseinrichtung bei der Bewegung des Handhebels von der Öffnungsstellung in die Schließstellung zuerst das Hauptventil geschlossen und zeitlich versetzt dazu die Verriegelung gelöst werden kann.

Vorzugsweise kann weiterhin vorgesehen sein, dass die Betätigungsvorrichtung dazu ausgebildet ist, bei einer Bewegung des Handhebels von der Schließstellung in die Öffnungsstellung zuerst ein Lösen der Verriegelung vorzubereiten und anschließend das Hauptventil zu betätigen. Da die Herstellung der Verriegelung in dieser Ausführungsform automatisch beim Aufsetzen des Zapfventils erfolgt, muss die Bewegung des Handhebels von der Schließstellung in die Öffnungsstellung nicht zur Herstellung der Verriegelung verwendet werden, sondern kann vielmehr zur Vorbereitung eines späteren Lösens verwendet werden. Eine solche Vorbereitung des Lösens der Verriegelung kann beispielsweise darin liegen, dass ein Rastelement der Betätigungsvorrichtung in ein Gegenrastelement der Kupplungseinrichtung eingerastet wird, so dass das Gegenrastelement bei einer nachfolgenden Bewegung des Handhebels von der Öffnungsstellung in die Schließstellung vom Rastelement mitgenommen werden kann, um ein Lösen der Verriegelung zu bewirken.

In einer bevorzugten Ausführungsform umfasst das Vermittlungselement daher ein Rastelement, welches in ein Gegenrastelement der Kupplungseinrichtung einrastbar ist. Das Einrasten kann im Rahmen einer Betätigung der Kupplungseinrichtung erfolgen und insbesondere durch eine Verschiebung des Vermittlungselements erreicht werden. Dadurch wird es möglich, dass das Rastelement bei einer nachfolgenden Verschiebung des Vermittlungselements in entgegengesetzter Richtung das Gegenrastelement mitnimmt. Das Mitnehmen des Gegenrastelements kann ebenfalls im Rahmen der Betätigung der Kupplungseinrichtung erfolgen.

In einer alternativen Ausführungsform ist die Kupplungseinrichtung durch eine Verschiebung des zweiten Fluidanschlusses in Richtung des Anschlussstutzens auf den Anschlussstutzen aufsetzbar, wobei die Betätigungsvorrichtung dazu ausgebildet ist, nach dem Aufsetzen der Kupplungseinrichtung auf den Anschlussstutzen bei einer Bewegung des Handhebels von der Schließstellung in die Öffnungsstellung zuerst eine Verriegelung zwischen dem zweiten Fluidanschluss und dem Anschlussstutzen herzustellen und anschließend das Hauptventil zu betätigen, insbesondere zu öffnen. Durch die zeitversetzte Betätigung von Kupplungseinrichtung und Hauptventil kann in einem ersten Handhebelbereich die vollständige vom Benutzer aufgebrachte Handkraft verwendet werden, um die Verriegelung des zweiten Fluidanschlusses am Anschlussstutzen herzustellen. Im zweiten Handhebelbereich kann daran anschließend die vollständige vom Benutzer aufgebrachte Handkraft in die Betätigung, insbesondere die Öffnung des Hauptventils umgewandelt werden. Die vom Benutzer zum Herstellen der Verriegelung sowie zum Öffnen des Hauptventils aufzuwendende Handkraft ist daher gegenüber dem Stand der Technik deutlich reduziert.

Vorzugsweise sind der Handhebel und das Koppelgelenk drehfest miteinander verbunden. Besonders bevorzugt sind der Handhebel und das Koppelgelenk einstückig miteinander verbunden. Bei einer drehfesten bzw. einstückigen Verbindung können auf den Handhebel ausgeübte Kräfte besonders effektiv auf das Koppelgelenk übertragen und somit unmittelbar und kraftsparend zur Betätigung verwendet werden.

Gegenstand der vorliegenden Erfindung ist auch eine Zapfsäule, welche eine erfindungsgemäße Zapfpistole aufweist.

Nachfolgend werden vorteilhafte Ausführungsformen der Erfindung unter Bezugnahme auf die beigefügten Zeichnungen beispielhaft erläutert. Es zeigen:
- Figur 1:: eine erste Ausführungsform eines erfindungsgemäßen Zapfventils in einer Seitenansicht;
- Figur 2A:: eine seitliche Schnittansicht durch das Auslaufrohr des erfindungsgemäßen Zapfventils der Figur 1 vor Herstellung der Verbindung zu einem Anschlussstutzen;
- Figur 2B:: eine seitliche Schnittansicht durch das Auslaufrohr des erfindungsgemäßen Zapfventils der Figur 1 nach Herstellung der Verbindung zu einem Anschlussstutzen;
- Figur 3:: das erfindungsgemäße Zapfventil der Figur 1 nach der Herstellung einer Verbindung mit einem Anschlussstutzen;
- Figur 4:: eine dreidimensionale Ansicht eines erfindungsgemäßen Handhebels und eines damit verbundenen Koppelgelenks;
- Figur 5:: das erfindungsgemäße Zapfventil der Figur 1 nachdem der Handhebel von einer Schließstellung in eine Zwischenstellung gebracht wurde;
- Figur 6A:: eine dreidimensionale vergrößerte Ansicht eines Ausschnittes der Ausführungsform der Figur 5;
- Figur 6B:: eine dreidimensionale Ansicht eines Ausschnittes der Ausführungsform der Figur 5;
- Figur 7:: das erfindungsgemäße Zapfventil der Figur 1 nachdem der Handhebel in eine Öffnungsstellung gebracht wurde;
- Figur 8:: eine alternative Ausführungsform eines erfindungsgemäßen Zapfventils in einer Seitenansicht;
- Figur 9:: eine seitliche Schnittansicht durch das Auslaufrohr des erfindungsgemäßen Zapfventils der Figur 8 nach Herstellung der Verbindung zu einem Anschlussstutzen;
- Figur 10:: eine vergrößerte Seitenansicht eines Teilbereichs der Ausführungsform der Figur 8, wobei ein Zustand vor Herstellung der Verriegelung gezeigt ist;
- Figur 11:: eine weitere alternative Ausführungsform eines erfindungsgemäßen Zapfventils in einer Seitenansicht;
- Figur 12:: eine dreidimensionale vergrößerte Ansicht eines Ausschnittes der Ausführungsform der Figur 11.

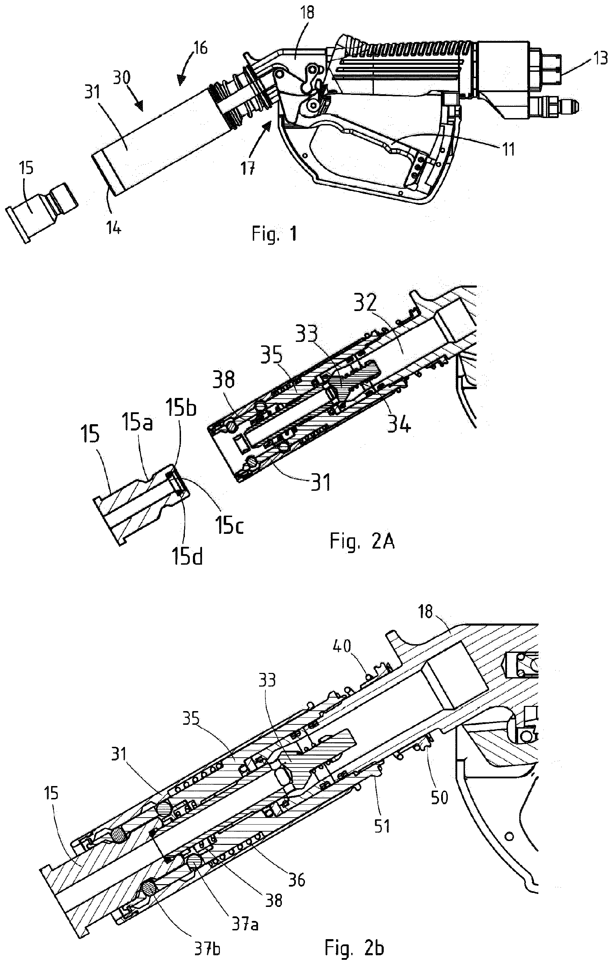

Figur 1 zeigt ein erfindungsgemäßes Zapfventil in einer Seitenansicht vor dem Herstellen einer Verbindung mit einem Anschlussstutzen 15. Das Zapfventil weist an seinem hinteren Ende einen ersten Fluidanschluss 13 auf, welcher beispielsweise mit einem Zapfschlauch verbunden werden kann (nicht gezeigt). Am vorderen Ende umfasst das Zapfventil ein Auslaufrohr 16 mit einem zweiten Fluidanschluss 14. Mit Hilfe einer Kupplungseinrichtung 30 kann der zweite Fluidanschluss 14 mit dem Anschlussstutzen 15 verbunden werden. Das Zapfventil umfasst ein Gehäuse 18, innerhalb dessen sich ein Kanal zur Durchleitung des Fluids vom ersten Fluidanschluss 13 zum zweiten Fluidanschluss 14 erstreckt. Im Kanal ist ein in dieser Ansicht nicht erkennbares Hauptventil angeordnet, über das der Durchfluss durch den Kanal gesteuert werden kann.

Das Zapfventil weist weiterhin eine Betätigungsvorrichtung 17 auf, mit deren Hilfe das Hauptventil und die Kupplungsvorrichtung 30 betätigt werden können. Die Betätigungsvorrichtung 17 umfasst unter anderem einen Handhebel 11, welcher sich in Figur 1 in der Schließstellung befindet. Die Betätigungsvorrichtung 17 wird weiter unten noch genauer erläutert.

Zur detaillierteren Beschreibung der am Auslaufrohr 16 befindlichen Kupplungsvorrichtung 30 sind in den Figuren 2A und 2B vergrößerte Schnittansichten des Auslaufrohres 16 gezeigt. Figur 2A zeigt den Zustand vor der Herstellung einer Verbindung zum Anschlussstutzen 15. Figur 2B zeigt den Zustand nach Herstellung dieser Verbindung.

Innerhalb des Auslaufrohres 16 verläuft ein Kanal 32 zur Durchleitung des Fluids. Der Kanal 32 ist durch ein Dichtelement 33 verschließbar, welches mit einem Schiebeelement 38 in Verbindung steht. Das Dichtelement 33 ist in Figur 2A durch eine Feder 34 in die Schließstellung vorgespannt.

Die Kupplungseinrichtung 30 umfasst einen Stator 35, welcher fest mit dem Gehäuse 18 verschraubt ist. Der Stator 35 ist umfänglich umgeben von einer relativ zum Stator 35 verschiebbaren Außenhülse 31, die durch eine Feder 36 zum vorderen Ende des Auslaufrohres 16 gedrängt wird. Sowohl in der Außenhülse 31 als auch im Stator 35 sind Aussparungen angeordnet, in die Verriegelungselemente 37a, 37b eingreifen können. Vor der Herstellung der Verbindung (Figur 2A) blockieren die Verriegelungselemente 37a, 37b eine Bewegung der Hülse 31 relativ zum Stator 35.

Beim Aufsetzen des Fluidanschlusses 14 auf den Anschlussstutzen 15 kommt eine Vorderfläche 15b des Anschlussstutzens 15 mit dem Schiebeelement 38 in Kontakt. Das Schiebeelement 38 wird dadurch zum hinteren Ende des Auslaufrohres 16 hin verschoben. Das mit dem Schiebeelement in Verbindung stehende Dichtelement 33 wird dabei ebenfalls verschoben und gibt den Kanal 32 frei. Der Anschlussstutzen 15 weist außerdem eine Dichtkomponente 15d mit einer Dichtfläche 15c auf. Beim Aufsetzten des Anschlussstutzens 15 dichtet die Dichtfläche 15c mit einem vorderen Ende des Dichtelements 33 ab (siehe Figuren 2a und 2b).

Gleichzeitig können die Verriegelungselemente 37a aufgrund der Verschiebung des Schiebeelements 38 nach innen ausweichen, so dass die Außenhülse 31 freigegeben wird und durch die Kraft der Feder 36 relativ zum Stator 35 zum vorderen Ende des Auslaufrohres 16 verschoben wird. Bei einem fortgesetzten Aufsetzen gelangen die Verriegelungselemente 37b in die Aussparung 15a des Anschlussstutzens 15, so dass dieser relativ zum Stator 35 verriegelt wird (siehe Figur 2B). Der Fluidanschluss 14 wird dadurch sicher am Anschlussstutzen 15 befestigt, so dass ein auszubringendes Fluid sicher durch den Kanal 32 in den Anschlussstutzen 15 und einen damit verbundenen Tank geleitet werden kann.

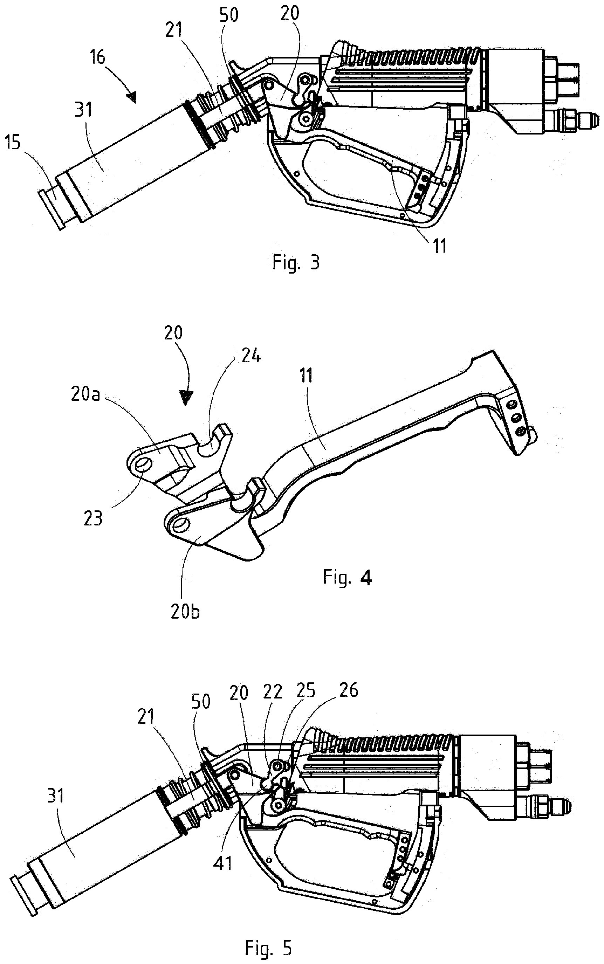

Die Figur 3 zeigt das Zapfventil in der Ansicht der Figur 1 nach der Herstellung der Verbindung zum Anschlussstutzen 15. Es ist im Vergleich mit der Figur 1 erkennbar, dass die Außenhülse 31 zum vorderen Ende des Auslaufrohres hin verschoben wurde. Durch diese Verschiebung werden die Verriegelungselemente 37b von der Außenhülse 31 in der Verriegelungsposition gehalten, in der der Anschlussstutzen mit dem Fluidanschluss 14 verriegelt ist (siehe Figur 2B).

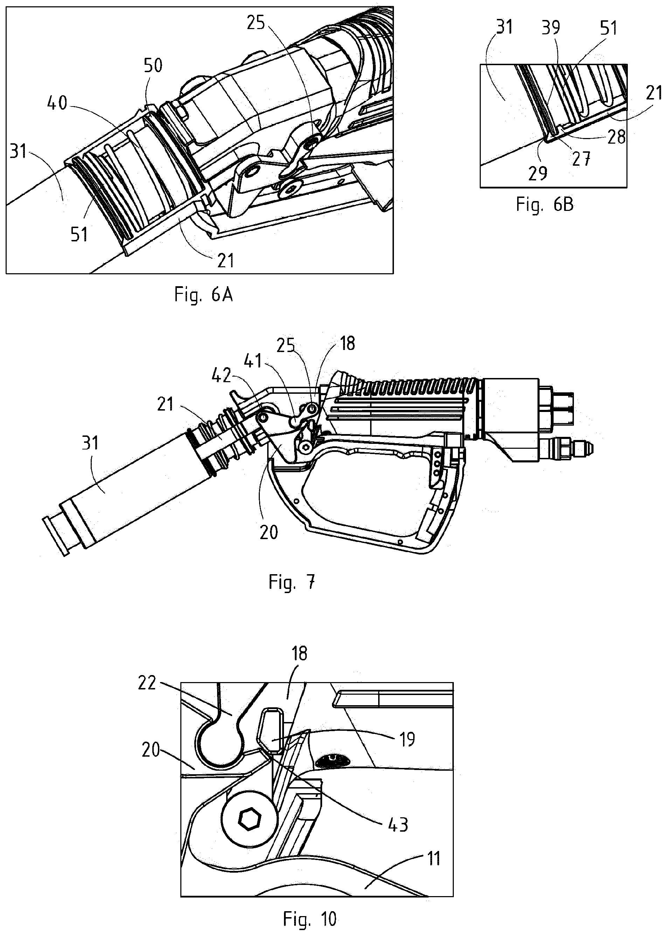

Nachfolgend wird die Ausgestaltung des Betätigungsmechanismus anhand der Figuren 3 bis 7 in größerem Detail erläutert. Dabei zeigt Figur 4 eine dreidimensionale seitliche Ansicht von Teilelementen der erfindungsgemäßen Betätigungsvorrichtung. Die Figuren 5 und 7 zeigen Seitenansichten des erfindungsgemä-ßen Zapfventils in verschiedenen Zuständen der Betätigungsvorrichtung. Die Figuren 6A und 6B zeigen dreidimensionale Ansichten von Ausschnitten des erfindungsgemäßen Zapfventils.

Die Betätigungsvorrichtung 17 umfasst einen Handhebel 11, welcher einstückig mit einem Koppelgelenk 20 verbunden ist. Wie in Figur 4 zu sehen, ist das Koppelgelenk 20 aus zwei symmetrisch angeordneten Hälften 20a, 20b aufgebaut, welche das Gehäuse 18 zwischen sich einschließen. In den Seitenansichten der Figuren 3, 5 und 6 ist lediglich eine Hälfte des Koppelgelenks 20 zu sehen. Nachfolgend wird der Einfachheit halber jeweils nur diese in den Seitenansichten erkennbare Hälfte der Betätigungsvorrichtung beschrieben.

Das Koppelgelenk 20 ist über eine erste Wirkverbindung mit der Kupplungseinrichtung 16 und über eine zweite Wirkverbindung mit dem Hauptventil verbunden.

Die erste Wirkverbindung umfasst einen seitlich am Zapfventil verschiebbar gelagerten Zughaken 21. Der Zughaken 21 ist entlang der Achse des Auslaufrohres 16 verschiebbar gelagert. Das Koppelgelenk 20 weist Durchgangslöcher 23 auf, über die der Zughaken 21 gelenkig mit dem Koppelgelenk 20 verbunden ist. Der Zughaken 21 stellt ein Vermittlungselement im Sinne der vorliegenden Erfindung dar. Die Zughaken 21 sind an ihrem hinteren Ende an einem entlang der Achse des Auslaufrohres 16 verschiebbaren Ring 50 gelagert. Der Ring 50 wird durch eine Feder 40 vorgespannt, welche den Ring zusammen mit den daran gelagerten Zughaken 21 zum hinteren Ende des Zapfventils drängt. Die Feder 40 kann somit als beispielhaftes Rückstellelement im Sinne der vorliegenden Erfindung angesehen werden, welches mit einem Vermittlungselement (vorliegend mit dem Zughaken 21) verbunden ist.

Die zweite Wirkverbindung umfasst einen Gelenkhebel 22, dessen erstes Ende in eine Aussparung 24 des Koppelgelenks 20 eingesetzt ist. Das erste Ende des Gelenkhebels kann gleitend innerhalb der Aussparung 24 abrollen und ist somit auf diese Weise gelenkig mit dem Koppelgelenk 20 verbunden. Der Gelenkhebel 22 ist an seinem anderen Ende gelenkig mit einem Ventilbetätigungsbolzen 25 verbunden. Der Ventilbetätigungsbolzen 25 ist in einer innerhalb des Gehäuses 18 befindlichen Kulisse 26 relativ zum Gehäuse verschiebbar gelagert. Durch eine Verschiebung des Ventilbetätigungsbolzen 25 kann das Hauptventil geöffnet bzw. geschlossen werden. Das Hauptventil ist mit Hilfe eines Rückstellelements (nicht gezeigt) in die Schließstellung vorgespannt. Von diesem Rückstellelement wird auch der mit dem Hauptventil verbundene Ventilbetätigungsbolzen 25 in seine Schließstellung gedrängt, in der er sich in Figur 3 befindet. Durch eine Verschiebung innerhalb der Kulisse 26 in Richtung des ersten Fluidanschlusses 13 kann das Hauptventil geöffnet werden. Die Kombination aus Gelenkhebel 22 und Ventilbetätigungsbolzen 25 bildet ein Vermittlungselement im Sinne der vorliegenden Erfindung. Der Ventilbetätigungsbolzen 25 kann als verschiebbarer Betätigungsschlitten im Sinne der Erfindung angesehen werden.

Die Figur 5 zeigt eine Seitenansicht des erfindungsgemäßen Zapfventils, bei dem der Handhebel 11 von der in Figur 3 gezeigten Schließstellung in eine zwischen der Schließstellung und der Öffnungsstellung befindlichen Zwischenstellung gebracht wurde. Der Bewegungsbereich des Handhebels 11 zwischen der in Figur 3 gezeigten Schließstellung und der in Figur 5 gezeigten Zwischenstellung stellt einen ersten Handhebelbereich im Sinne der vorliegenden Erfindung dar.

Durch eine Bewegung des Handhebels 11 in diesem ersten Handhebelbereich wird das Koppelgelenk 20 zunächst um eine erste Schwenkachse 41 gedreht (siehe Figur 5), welche im Wesentlichen senkrecht zur Zeichenebene der Figuren 3 und 5 steht und welche in etwa durch den Mittelpunkt der Aussparungen 24 des Koppelgelenks 20 verläuft. Gleichzeitig kommt es zu einer durch die Führung der Zughaken 21 sowie des Gelenkhebels 22 vorgegebenen Verschiebung des Koppelgelenks 20, so dass die Position der Schwenkachse 41 im Verlauf der Bewegung des Handhebels 11 im ersten Handhebelbereich verlagert wird. Die Schwenkachse 41 bewegt sich dabei in etwa kreisförmig um den Ventilbetätigungsbolzen 25 herum. Diese kreisförmige Verlagerung der Schwenkachse 41 wird durch die gelenkige Verbindung des Gelenkhebels 22 am Ventilbetätigungsbolzen 25 verursacht. Relativ zum Koppelgelenk bleibt die Schwenkachse 41 jedoch fixiert. Die kombinierte Drehung und Verschiebung des Koppelgelenks 20 führt zu einer Verschiebung der Zughaken 21 in Richtung des vorderen Endes des Auslaufrohres 16. Die Verschiebung der Zughaken 21 erfolgt gegen die Spannkraft der Feder 40.

In den Figuren 6A und 6B ist erkennbar, dass die Zughaken 21 an ihrem vorderen Ende eine Schrägfläche 29, ein Rastelement 27 sowie ein Anschlagselement 28 aufweisen. Zudem ist am hinteren Ende der Außenhülse 31 ein umlaufender Vorsprung 39 angeordnet. In Axialrichtung hinter dem Vorsprung 39 befindet sich außerdem eine nach außen vorspringende Schrägfläche 51 des Stators 35 (siehe auch Figur 2B). Während der durch die Drehung des Koppelgelenks 20 verursachten Verschiebung der Zughaken 21 läuft die Schrägfläche 29 außen am Vorsprung 39 entlang, so dass das vordere Ende der Zughaken 21 nach außen aufgeweitet wird. Nach einer gewissen Verschiebung rastet das Rastelement 27 hinter dem Vorsprung 39 ein. Zudem schlägt das Anschlagselement 28 am hinteren Ende des Vorsprungs 39 an, so dass eine weitere Verschiebung der Zughaken 21 zum vorderen Ende verhindert wird. Der eingerastete Zustand ist in den Figuren 5, 6A und 6B gezeigt. Da die Zughaken 21 nicht weiter zum vorderen Ende verschoben werden können, wird auch das Koppelgelenk 20 an einer weiteren Verschiebung bzw. Drehung gehindert.

Figur 7 zeigt eine Seitenansicht des erfindungsgemäßen Zapfventils, bei dem der Handhebel 11 von der in Figur 5 gezeigten Zwischenstellung in eine Öffnungsstellung gebracht wurde. Der Bewegungsbereich des Handhebels 11 zwischen der in Figur 5 gezeigten Zwischenstellung und der in Figur 7 gezeigten Öffnungsstellung stellt einen zweiten Handhebelbereich im Sinne der vorliegenden Erfindung dar.

Da eine weitere Verschiebung bzw. Drehung des Koppelgelenks 20 durch das Anschlagen der Zughaken am Anschlagselement 28 verhindert wird, wird das Koppelgelenk 20 bei einer Bewegung des Handhebels 11 in diesem zweiten Handhebelbereich um eine zweite Schwenkachse 42 gedreht, welche im Wesentlichen senkrecht zur Zeichenebene der Figuren 3, 5 und 7 steht und welche in etwa durch den Mittelpunkt der Durchgangslöcher 23 des Koppelgelenks 20 verläuft. Durch die Betätigung des Handhebels 11 im zweiten Handhebelbereich wird somit das Koppelgelenk 20 zu einer Drehung um die Schwenkachse 42 veranlasst, welche wiederum in eine Drehung und Verschiebung des Gelenkhebels 22 sowie eine Verschiebung des Ventilbetätigungsbolzens 25 in Richtung des ersten Fluidanschlusses 13 umgewandelt wird. Dadurch wird das Hauptventil entgegen der Kraft seines Rückstellelements von der Schließstellung in die Öffnungsstellung bewegt. Das auszubringende Fluid kann in diesem Zustand vom Flüssigkeitsanschluss 13 aus durch den Kanal sowie das geöffnete Hauptventil über das Auslassrohr in den damit verbundenen Anschlussstutzen befördert werden.

Es kann vorgesehen sein, dass der Handhebel in der Öffnungsstellung arretierbar ist (hier nicht gezeigt), um den Handhebel sowie das Hauptventil in der Öffnungsstellung zu halten.

Nach Beendigung des Betankungsvorgangs kann der Handhebel von der Öffnungsstellung zurück in die Schließstellung bewegt werden, indem eine ggf. vorhandene Arretierung gelöst und die vom Benutzer ausgeübte Handkraft reduziert wird. Der Handhebel durchläuft dann zunächst den zweiten Handhebelbereich und anschließend den ersten Handhebelbereich, und zwar jeweils in umgekehrter Richtung. Bei der Bewegung des Handhebels im zweiten Handhebelbereich von der Öffnungsstellung in die Zwischenstellung findet zunächst eine Drehung des Koppelgelenks 20 um die zweite Schwenkachse 42 statt. Einhergehend mit dieser Bewegung wird der Gelenkhebel 22 gedreht und der Ventilbetätigungsbolzen 25 zum vorderen Ende des Zapfventils hin verschoben, so dass das Hauptventil verschlossen wird. Die oben beschriebene Bewegung wird durch das Rückstellelement des Hauptventils, welches dieses in die Schließstellung drängt, verursacht.

Die anschließende Bewegung des Handhebels von der Zwischenstellung in die Schließstellung (erster Handhebelbereich) wird durch die Feder 40 verursacht, welche die Zughaken 21 zusammen mit der daran eingerasteten Außenhülse 31 zum hinteren Ende des Zapfventils hin zurückzieht, wobei gleichzeitig umgekehrt zu der oben bereits beschriebenen Reihenfolge eine Verschiebung des Koppelgelenks 20 sowie eine Drehung des Koppelgelenks 20 um die erste Schwenkachse 41 stattfindet. Durch das Zurückziehen der Außenhülse 31 können die Verriegelungselemente 37a, 37b in die Aussparungen der Außenhülse nach außen ausweichen, so dass der Anschlussstutzen 15 freigegeben wird. Nach der Freigabe des Anschlussstutzens werden die Zughaken 21 noch weiter nach hinten gezogen, so dass die Anschläge 28 der Zughaken 21 die oben bereits erwähnte Schrägfläche 51 des Stators 35 erreichen und darauf auflaufen. Dabei werden die Zughaken 21 nach außen aufgeweitet und dadurch aus der Verrastung mit dem Vorsprung 39 der Außenhülse 31 herausgehoben. Die Außenhülse 31 ist dann wieder frei entlang des Auslaufrohrs verschiebbar und kann bei einem nachfolgenden Verbindungsvorgang wieder wie oben beschrieben mit einem Anschlussstutzen verriegelt werden.

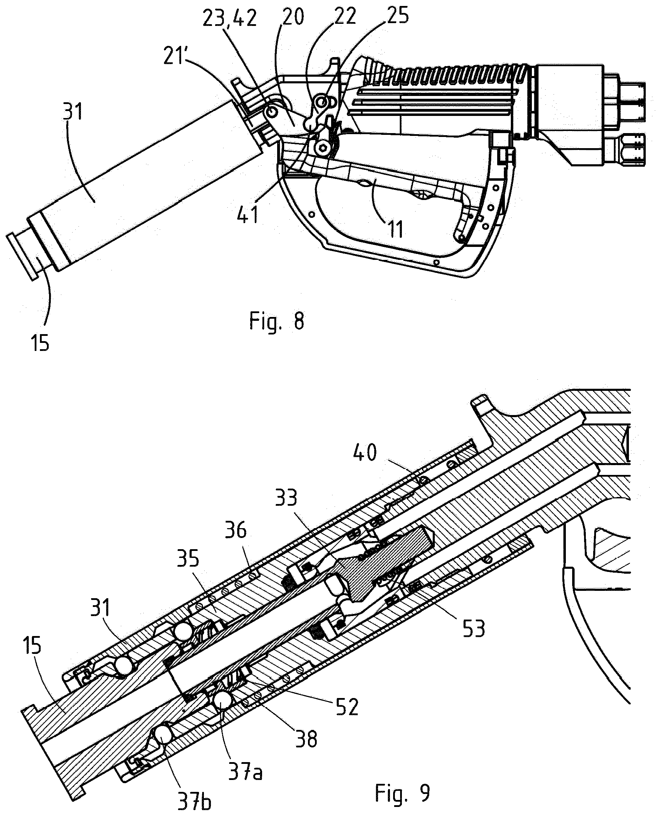

Die Figur 8 zeigt eine alternative Ausführungsform eines erfindungsgemäßen Zapfventils in einer Seitenansicht. Figur 9 zeigt eine seitliche Schnittansicht des Auslaufrohres der zweiten Ausführungsform. Bereits in Verbindung mit der ersten Ausführungsform beschriebene Elemente tragen dieselben Bezugszeichen und werden im Folgenden nicht erneut im Detail erläutert. Nachfolgend sollen lediglich die Unterschiede zwischen den Ausführungsformen beschrieben werden.

Im Unterschied zur ersten Ausführungsform ist die zweite Ausführungsform nicht dazu ausgebildet, bei einer Verschiebung des zweiten Fluidanschlusses 14 in Richtung des Anschlussstutzens 15 eine automatische Verriegelung zwischen dem zweiten Fluidanschluss 14 und dem Anschlussstutzen 15 herzustellen. Eine Verriegelung findet bei dieser Ausführungsform nach dem Aufsetzten erst dadurch statt, dass die Außenhülse 31 durch eine Bewegung des Handhebels im ersten Handhebelbereich aus der Schließstellung in Richtung Öffnungsstellung bewegt wird. Die Zughaken 21' sind in dieser Ausführungsform im Unterschied zur zweiten Ausführungsform fest mit der Außenhülse 31 verbunden.

Bei Aufsetzen des Fluidanschlusses 14 auf den Anschlussstutzen 15 wird, ebenso wie bei der ersten Ausführungsform (vgl. Figu-ren 2A und 2B), das Schiebeelement 38 entgegen der Rückstellkraft einer Feder 52 nach hinten verschoben und das Dichtelement 33 entgegen der Rückstellkraft der Feder 53 aus seiner Schließstellung herausbewegt (siehe Figur 9). Die Verriegelungselemente 37a, 37b können dann nach innen ausweichen, so dass die Außenhülse entlang des Auslaufrohres verschoben werden kann. Wird nun der Handhebel im ersten Handhebelbereich von der Schließstellung in Richtung Öffnungsstellung betätigt, wird die Außenhülse 31 über die Zughaken 21' nach vorne geschoben. Dadurch wird der Fluidanschluss mit dem Anschlussstutzen verriegelt (siehe Figur 9). Während der Verschiebung der Zughaken 21` nach vorne erfolgt, ebenso wie bei der ersten Ausführungsform, eine kombinierte Verschiebung und Verdrehung des Koppelgelenks 20 hervorgerufen durch die oben bereits beschriebenen Wirkverbindungen sowie die dadurch gebildete Führung für das Koppelgelenk.

In der verriegelten Position kann die Außenhülse 31 nicht weiter nach vorne verschoben werden, so dass bei einer weiteren Betätigung des Handhebels keine weitere Verschiebung des Koppelgelenks 20 und somit der Schwenkachse 42 zum vorderen Ende hin erfolgen kann. Wird der Handhebel 11 nun im zweiten Handhebelbereich weiter in Richtung Öffnungsstellung bewegt, wird - wie oben bereits in Verbindung mit der ersten Ausführungsform beschrieben - das Koppelgelenk 20 um die Schwenkachse 42 geschwenkt, der Gelenkhebel 22 betätigt und das Hauptventil geöffnet.

Figur 10 zeigt eine vergrößerte Seitenansicht eines Ausschnittes der Figur 8 vor dem Herstellen einer Verriegelung zwischen Fluidanschluss 14 und Anschlussstutzen 15. In dieser Ansicht ist ein Teil des Gelenkhebels 22, des Handhebels 11, des Koppelgelenks 20 sowie des Gehäuses 18 zu sehen. Weiter ist erkennbar, dass am Gehäuse 18 ein Anschlag 19 angeordnet ist, gegen den eine Nase 43 des Koppelgelenks 20 anliegt. Wird in diesem Zustand der Betätigungsvorrichtung 17 (in der sich der Handhebel 11 in der Schließstellung befindet) eine Kraft auf den Handhebel 11 ausgeübt, blockiert der Anschlag 19 aufgrund des Kontakts mit der Nase 43 eine Bewegung des Handhebels 11. Es ist dadurch sichergestellt, dass das Hauptventil nicht geöffnet werden kann, sofern der Fluidanschluss 14 nicht ordnungsgemäß mit dem Anschlussstutzen 15 verbunden wurde.

Erst durch das ordnungsgemäße Aufsetzen des Fluidanschlusses 14 auf den Anschlussstutzen 15 wird, wie oben erläutert, den Verriegelungselementen 37a ermöglicht, nach innen auszuweichen, so dass die Außenhülse 31 über die Betätigungsvorrichtung 17 relativ zum Stator 35 zum vorderen Ende des Auslaufrohres verschoben werden kann und den Anschlussstutzen 15 über die Verriegelungselemente 37b mit dem Stator 35 verriegelt. Erst durch diese Freigabe der Außenhülse 31 kann das Koppelgelenk 20 bei Betätigung des Handhebels 11 im ersten Handhebelbereich mittels der oben beschriebenen kombinierten Drehung und Verschiebung am Anschlag 19 vorbei geschwenkt werden. Die vorliegend in Verbindung mit der Ausführungsform der Figuren 8 und 9 beschriebene Sicherung gegen eine unerwünschte Öffnung des Hauptventils vor Herstellung der Verriegelung kann auf analoge Weise auch in Verbindung mit der Ausführungsform der Figuren 1 bis 7 realisiert werden.

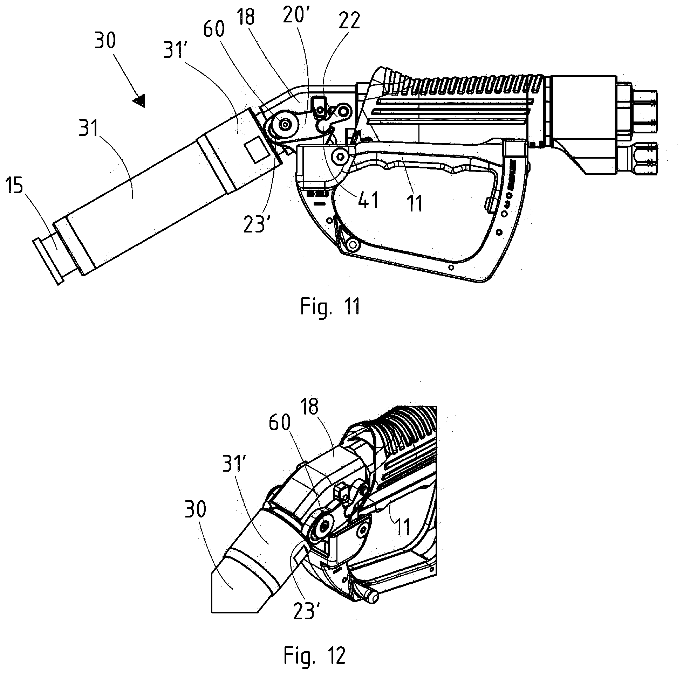

Die Figur 11 zeigt eine weitere alternative Ausführungsform eines erfindungsgemäßen Zapfventils in einer Seitenansicht. Figur 12 zeigt eine dreidimensionale vergrößerte Ansicht eines Ausschnittes der Ausführungsform der Figur 11. Bereits in Verbindung mit der ersten und zweiten Ausführungsform beschriebene Elemente tragen dieselben Bezugszeichen und werden im Folgenden nicht erneut im Detail erläutert. Nachfolgend sollen lediglich die Unterschiede zu den vorhergehenden Ausführungsformen beschrieben werden.

Die Ausführungsform der Figuren 11 und 12 weist einen Hand-hebel 11 auf, welcher drehfest mit einem Koppelgelenk 20` verbunden ist. Im Unterschied zum Koppelgelenk 20 der voranstehend beschriebenen Ausführungsformen ist das Koppelgelenk 20` dazu ausgebildet, mit einem rückwärtigen Abschnitt 31` der Außenhülse 31 in Kontakt zu treten, wenn der Schalthebel 11 betätigt wird. Eine Wirkverbindung zwischen dem Koppelgelenk 20' und der Kupplungseinrichtung 30 wird somit durch Kontakt einer Frontfläche des Koppelgelenks 20' mit dem Abschnitt 31` der Außenhülse 31 realisiert, wobei zwischen der Frontfläche des Koppelgelenks 20' und dem Abschnitt 31` reibungs- und/oder verschleißmindernde Zwischenelemente wie beispielsweise eine Gleitbuchse angeordnet sein können. Die Wirkverbindung weist im Unterschied zu den anderen beiden Ausführungsformen keine Zughaken auf.

Am vorderen Ende des Koppelgelenks 20' befindet sich ein Langloch 23`, durch das ein am Gehäuse 18 fixierter Führungsbolzen 60 geführt ist. Das Koppelgelenk 20' ist relativ zum Führungsbolzen 60 drehbar und kann außerdem entlang einer durch das Langloch 23' vorgegebenen Richtung relativ zum Führungsbolzen 60 (und somit relativ zum Gehäuse 18) verschoben werden. Auch in dieser Ausführungsform drängt ein in den Figuren nicht erkennbares Rückstellelement (analog zur Feder 40 in Figur 9) die Außenhülse 31 zum hinteren Ende des Zapfventils.

Bei einer Betätigung des Schalthebels von der Schließstellung (nicht gezeigt) in die in den Figuren 11 und 12 gezeigte Öffnungsstellung kommt es zunächst (ebenso wie bei den anderen Ausführungsformen) zu einer Drehung des Koppelgelenks 20' um die Achse 41. Durch diese Drehung wird das Koppelgelenk 20`relativ zum Gehäuse 18 zum vorderen Ende des Zapfventils verschoben. Dabei bewegt sich der Führungsbolzen innerhalb des Langlochs 23' zu dem hinteren Ende des Lang-lochs 23`. Durch die Verschiebung des Koppelgelenks 20' nach vorne trifft die Frontfläche des Koppelgelenks 20` auf den Abschnitt 31` der Außenhülse 31. Die Außenhülse 31 wird dadurch entgegen der Rückstellkraft der Feder 40 zum vorderen Ende des Zapfventils bewegt, so dass (wie bei der Ausführungsform der Figuren 8 und 9) eine Verriegelung mit dem Anschlussstutzen 15 stattfindet.

Nach der Verriegelung kann die Außenhülse 31 nicht mehr weiter nach vorne bewegt werden. Bei einer weiteren Betätigung des Schalthebels 11 findet daher eine Drehung des Koppelgelenks 20' um die Achse des Führungsbolzens 60 statt. Dies Drehung führt ebenso wie bereits in Verbindung mit den anderen Ausführungsformen beschrieben zu einer Betätigung (Drehung und Verschiebung) des Gelenkhebels 22 sowie zu einer Verschiebung des Ventilbetätigungsbolzens 25 in Richtung des ersten Fluidanschlusses 13 sowie zu einer Öffnung des Hauptventils.

Bei einer Schließbewegung des Handhebels laufen die oben beschriebenen Betätigungsvorgänge in umgekehrter Reihenfolge ab, so dass insoweit kein weiterer Unterschied zu den voranstehend bereits beschriebenen Ausführungsformen besteht.

## Patentansprüche

1. Zapfventil zum Ausbringen eines Fluids in einen Tank, welches aufweist:
a. einen ersten mit einer Fluidzuleitung verbindbaren Fluidanschluss (13),
b. einen zweiten mit einem Anschlussstutzen (15) des Tanks verbindbaren Fluidanschluss (14),
c. einen Kanal zur Durchleitung des Fluids vom ersten (13) zum zweiten Fluidanschluss (14),
d. ein im Kanal angeordnetes Hauptventil,
e. eine Kupplungseinrichtung (30) zur Herstellung einer Verbindung zwischen dem Zapfventil und dem Anschlussstutzen (15), und
f. eine Betätigungsvorrichtung (17) zur Betätigung der Kupplungseinrichtung (30) und des Hauptventils, wobei die Betätigungsvorrichtung (17) einen Handhebel (11) aufweist, welcher zwischen einer Schließstellung und einer Öffnungsstellung bewegbar ist, wobei
die Betätigungsvorrichtung (17) dazu eingerichtet ist, eine Bewegung des Handhebels (11) zwischen der Schließstellung und der Öffnungsstellung in eine zeitlich versetzte Betätigung der Kupplungseinrichtung (30) und des Hauptventils umzuwandeln, **dadurch gekennzeichnet, dass** die Betätigungsvorrichtung ein mit dem Handhebel (11) verbundenes Koppelgelenk (20) aufweist, welches durch eine erste Wirkverbindung mit der Kupplungseinrichtung (30) und durch eine zweite Wirkverbindung mit dem Hauptventil verbunden ist, wobei die Wirkverbindungen für das Koppelgelenk (20, 20`) eine Führung bilden, so dass das Koppelgelenk (20, 20`) bei einer Betätigung des Handhebels (11) in einem ersten Handhebelbereich zu einer Drehung um eine erste Schwenkachse (41) und/oder zu einer Verschiebung in eine erste Richtung veranlasst wird, und dass das Koppelgelenk (20, 20`) bei einer Betätigung des Handhebels (11) in einem zweiten Handhebelbereich zu einer Drehung um eine zweite Schwenkachse (42) und/oder zu einer Verschiebung in eine zweite Richtung veranlasst wird.

2. Zapfventil gemäß Anspruch 1, bei dem die Wirkverbindungen dazu ausgebildet sind, die Drehung des Koppelgelenks (20, 20`) um die erste Schwenkachse (41) und/oder die Verschiebung des Koppelgelenks (20, 20`) in die erste Richtung zumindest teilweise in eine Betätigung der Kupplungseinrichtung (30) umzuwandeln, und die Drehung des Koppelgelenks (20, 20`) um die zweite Schwenkachse und/oder die Verschiebung des Koppelgelenks (20, 20`) in die zweite Richtung zumindest teilweise in eine Betätigung des Hauptventils umzuwandeln.

3. Zapfventil gemäß einem der Ansprüche 1 oder 2, welches Mittel zur Führung des Koppelgelenks (20`) relativ zu einem Gehäuse (18) des Zapfventils aufweist, wobei die Mittel vorzugsweise einen am Gehäuse fixierten Führungsbolzen (60) aufweisen, welcher in ein im Koppelgelenk (20') ausgebildetes Langloch (23') eingreift.

4. Zapfventil gemäß einem der Ansprüche 1 bis 3, bei dem zumindest eine der Wirkverbindungen ein Vermittlungselement (21, 22, 25) aufweist, welches gelenkig mit dem Koppelgelenk (20, 20`) verbunden ist, wobei das Vermittlungselement (21, 22, 25) vorzugsweise durch eine Bewegung des Koppelgelenks (20, 20`) zu einer Verschiebung und/oder zu einer Drehung relativ zum Zapfventil veranlasst wird.

5. Zapfventil gemäß Anspruch 4, bei dem das Vermittlungselement (22, 25) einen relativ zum Zapfventil verschiebbaren Betätigungsschlitten (25) sowie ein Gelenkelement (22) aufweist, welches das Koppelgelenk (20, 20`) gelenkig mit dem Betätigungsschlitten (25) verbindet.

6. Zapfventil gemäß einem der Ansprüche 4 oder 5, welches eine Einrichtung (39) aufweist, die die Verschiebbarkeit und/oder Drehbarkeit des Vermittlungselements (21, 22, 25) begrenzt, so dass das Vermittlungselement (21, 22, 25) durch eine Bewegung des Koppelgelenks (20, 20`) nur bis zu einer Endposition verschiebbar und/oder drehbar ist, wobei das Koppelgelenk (20, 20') vorzugsweise nach dem Erreichen der Endposition an einer weiteren Drehung um die erste oder zweite Schwenkachse und/oder an einer weiteren Verschiebung entlang der ersten oder zweiten Richtung gehindert wird.

7. Zapfventil gemäß einem der Ansprüche 4 bis 6, bei dem das Vermittlungselement (21, 22, 25) mit einem Rückstellelement verbunden ist, wobei das Rückstellelement eine Verschwenkung des Koppelelements (20, 20`) um die erste oder zweite Schwenkachse fördert oder erschwert.

8. Zapfventil gemäß einem der Ansprüche 4 bis 7, bei dem das Vermittlungselement (21, 22, 25) mit einem Rückstellelement (40) verbunden ist, wobei das Rückstellelement (40) eine Verschiebung des Koppelgelenks (20, 20`) in die erste oder zweite Richtung fördert oder erschwert.

9. Zapfventil gemäß einem der Ansprüche 7 oder 8, bei dem das Rückstellelement dazu ausgebildet ist, das Hauptventil in seine Schließstellung zu drängen.

10. Zapfventil gemäß einem der Ansprüche 1 bis 9, bei dem die Kupplungseinrichtung (30) dazu ausgebildet ist, bei einer Verschiebung des zweiten Fluidanschlusses (14) in Richtung des Anschlussstutzens (15) eine automatische Verriegelung zwischen dem zweiten Fluidanschluss (14) und dem Anschlussstutzen (15) herzustellen, wobei die Betätigungsvorrichtung (17) dazu ausgebildet ist, bei einer Bewegung des Handhebels von der Öffnungsstellung in die Schließstellung zuerst das Hauptventil zu betätigen und anschließend die Verriegelung zwischen dem zweiten Fluidanschluss (14) und dem Anschlussstutzen (15) zu lösen.

11. Zapfventil gemäß Anspruch 10, bei dem die Betätigungsvorrichtung (17) ein Rastelement (27) aufweist, welches in ein Gegenrastelement (39) der Kupplungseinrichtung (30) einrastbar ist.

12. Zapfventil gemäß einem der Ansprüche 1 bis 9, bei dem die Kupplungseinrichtung (30) durch eine Verschiebung des zweiten Fluidanschlusses (14) in Richtung des Anschlussstutzens (15) auf den Anschlussstutzen aufsetzbar ist, wobei die Betätigungsvorrichtung (17) dazu ausgebildet ist, nach dem Aufsetzen der Kupplungseinrichtung (30) auf den Anschlussstutzen (15) bei einer Bewegung des Handhebels von der Schließstellung in die Öffnungsstellung zuerst eine Verriegelung zwischen dem zweiten Fluidanschluss (14) und dem Anschlussstutzen (15) herzustellen und anschließend das Hauptventil zu betätigen, insbesondere das Hauptventil zu öffnen.

13. Zapfventil gemäß einem der Ansprüche 1 bis 12, bei dem der Handhebel (11) und das Koppelgelenk (20, 20`) drehfest und vorzugsweise einstückig miteinander verbunden sind.

14. Zapfventil gemäß einem der Ansprüche 1 bis 13, bei dem die Kupplungseinrichtung zur Herstellung einer fluiddichten Verbindung zwischen dem Anschlussstutzen (15) und dem zweiten Fluidanschluss (14) ausgebildet ist, wobei das Zapfventil vorzugsweise zur Druckbetankung des Tanks ausgebildet ist.

15. Zapfsäule zur Ausbringung eines Fluids, **dadurch gekennzeichnet, dass** sie ein Zapfventil gemäß einem der Ansprüche 1 bis 14 aufweist.

## Claims

1. Filling nozzle for delivering a fluid into a tank, said filling nozzle having:
a. a first fluid connector (13) which is connectable to a fluid infeed line;
b. a second fluid connector (14) which is connectable to a connector port (15) of the tank;
c. a duct for directing the fluid from the first fluid connector (13) to the second fluid connector (14);
d. a main valve which is disposed in the duct;
e. a coupling installation (30) for establishing a connection between the filling nozzle and the connector port (15); and
f. an activation device (17) for activating the coupling installation (30) and the main valve, wherein the activation device (17) has a hand lever (11) which is movable between a closed position and an opened position, wherein
the activation device (17) is specified for converting a movement of the hand lever (11) between the closed position and the opened position to a temporally offset activation of the coupling installation (30) and the main valve, **characterized in that** the activation device has a coupling joint (20) which is connected to the hand lever (11) and which by way of a first operative connection is connected to the coupling installation (30) and by way of a second operative connection is connected to the main valve, wherein the operative connections for the coupling joint (20, 20') form a guide such that the coupling joint (20, 20') when activating the hand lever (11) in a first hand lever range is initiated to rotate about a first pivot axis (41) and/or to displace in a first direction, and **in that** the coupling joint (20, 20') when activating the hand lever (11) in a second hand lever range is initiated to rotate about a second pivot axis (42) and/or to displace in a second direction.

2. Filling nozzle according to Claim 1, wherein the operative connections are configured for at least partially converting the rotation of the coupling joint (20, 20') about the first pivot axis (41) and/or the displacement of the coupling joint (20, 20') in the first direction to an activation of the coupling installation (30), and for at least partially converting the rotation of the coupling joint (20, 20') about the second pivot axis and/or the displacement of the coupling joint (20, 20') in the second direction to an activation of the main valve.

3. Filling nozzle according to either of Claims 1 or 2, said filling nozzle having means for guiding the coupling joint (20') relative to a housing (18) of the filling nozzle, wherein the means preferably have a guide pin (60) which is fixed to the housing and which engages in an elongate bore (23') which is configured in the coupling joint (20').

4. Filling nozzle according to one of Claims 1 to 3, wherein at least one of the operative connections has a relaying element (21, 22, 25) which is connected in an articulated manner to the coupling joint (20, 20'), wherein the relaying element (21, 22, 25) is preferably initiated to displace and/or rotate relative to the filling nozzle by a movement of the coupling joint (20, 20').

5. Filling nozzle according to Claim 4, wherein the relaying element (22, 25) has an activation slide (25) which is displaceable relative to the filling nozzle, as well as a joint element (22) which connects in an articulated manner the coupling joint (20, 20') to the activation slide (25).

6. Filling nozzle according to either of Claims 4 or 5, said filling nozzle having an installation (39) which delimits the displacing capability and/or the rotating capability of the relaying element (21, 22, 25) such that the relaying element (21, 22, 25) by a movement of the coupling joint (20, 20') is displaceable and/or rotatable only to a terminal position, wherein the coupling joint (20, 20') preferably upon reaching the terminal position is prevented from further rotating about the first or the second pivot axis, and/or is prevented from further displacing along the first or the second direction.

7. Filling nozzle according to one of Claims 4 to 6, wherein the relaying element (21, 22, 25) is connected to a restoring element, wherein the restoring element facilitates or impedes pivoting of the coupling element (20, 20') about the first or the second pivot axis.

8. Filling nozzle according to one of Claims 4 to 7, wherein the relaying element (21, 22, 25) is connected to a restoring element (40), wherein the restoring element (40) facilitates or impedes displacing of the coupling joint (20, 20') in the first or the second direction.

9. Filling nozzle according to either of Claims 7 or 8, wherein the restoring element is configured for urging the main valve to the closed position thereof.

10. Filling nozzle according to one of Claims 1 to 9, wherein the coupling installation (30) in a displacement of the second fluid connector (14) in the direction of the connector port (15) is configured for establishing automatic locking between the second fluid connector (14) and the connector port (15), wherein the activation device (17) in a movement of the hand lever from the opened position to the closed position is configured for first activating the main valve and for subsequently releasing the locking mechanism between the second fluid connector (14) and the connector port (15).

11. Filling nozzle according to Claim 10, wherein the activation device (17) has a latching element (27) which is capable of latching in a counter-latching element (39) of the coupling installation (30).

12. Filling nozzle according to one of Claims 1 to 9, wherein the coupling installation (30) is capable of being placed on the connector port by displacing the second fluid connector (14) in the direction of the connector port (15), wherein, upon placing the coupling installation (30) on the connector port (15), the activation device (17) when moving the hand lever from the closed position to the opened position is configured for first establishing a locking mechanism between the second fluid connector (14) and the connector port (15), and for subsequently activating the main valve, in particular for opening the main valve.

13. Filling nozzle according to one of Claims 1 to 12, wherein the hand lever (11) and the coupling joint (20, 20') are connected to one another in a rotationally fixed and preferably integral manner.

14. Filling nozzle according to one of Claims 1 to 13, wherein the coupling installation is configured for establishing a fluid-tight connection between the connector port (15) and the second fluid connector (14), wherein the filling nozzle is preferably configured for pressure fuelling the tank.

15. Filling pump for delivering a fluid, **characterized in that** said filling pump has a filling nozzle according to one of Claims 1 to 14.

## Revendications

1. Soupape de distribution pour distribuer un fluide dans un réservoir, qui présente :
a. un premier raccord de fluide (13) pouvant être relié à une conduite d'amenée de fluide,
b. un deuxième raccord de fluide (14) pouvant être relié à une tubulure de raccordement (15) du réservoir,
c. un canal pour le passage du fluide du premier (13) au deuxième raccord de fluide (14),
d. une soupape principale agencée dans le canal,
e. un appareil d'accouplement (30) pour établir une liaison entre la soupape de distribution et la tubulure de raccordement (15), et
f. un dispositif d'actionnement (17) pour actionner l'appareil d'accouplement (30) et la soupape principale, le dispositif d'actionnement (17) présentant un levier manuel (11) qui peut être déplacé entre une position de fermeture et une position d'ouverture,
le dispositif d'actionnement (17) étant adapté pour transformer un déplacement du levier manuel (11) entre la position de fermeture et la position d'ouverture en un actionnement décalé dans le temps de l'appareil d'accouplement (30) et de la soupape principale, **caractérisée en ce que** le dispositif d'actionnement présente une articulation d'accouplement (20) reliée au levier manuel (11), qui est reliée par une première liaison active à l'appareil d'accouplement (30) et par une deuxième liaison active à la soupape principale, les liaisons actives formant un guidage pour l'articulation d'accouplement (20, 20'), de telle sorte que l'articulation d'accouplement (20, 20'), lors d'un actionnement du levier manuel (11) dans une première zone de levier manuel, est amenée à tourner autour d'un premier axe de pivotement (41) et/ou à coulisser dans une première direction, et que l'articulation d'accouplement (20, 20'), lors d'un actionnement du levier manuel (11) dans une deuxième zone de levier manuel, est amenée à tourner autour d'un deuxième axe de pivotement (42) et/ou à coulisser dans une deuxième direction.

2. Soupape de distribution selon la revendication 1, dans laquelle les liaisons actives sont configurées pour transformer la rotation de l'articulation d'accouplement (20, 20') autour du premier axe de pivotement (41) et/ou le coulissement de l'articulation d'accouplement (20, 20') dans la première direction au moins partiellement en un actionnement de l'appareil d'accouplement (30), et pour transformer la rotation de l'articulation d'accouplement (20, 20') autour du deuxième axe de pivotement et/ou le coulissement de l'articulation d'accouplement (20, 20') dans la deuxième direction au moins partiellement en un actionnement de la soupape principale.

3. Soupape de distribution selon l'une quelconque des revendications 1 ou 2, qui présente des moyens de guidage de l'articulation d'accouplement (20') par rapport à un boîtier (18) de la soupape de distribution, les moyens présentant de préférence une broche de guidage (60) fixée au boîtier, qui s'engage dans un trou oblong (23') réalisé dans l'articulation d'accouplement (20').

4. Soupape de distribution selon l'une quelconque des revendications 1 à 3, dans laquelle au moins l'une des liaisons actives présente un élément de commutation (21, 22, 25) qui est relié de manière articulée à l'articulation d'accouplement (20, 20'), l'élément de commutation (21, 22, 25) étant de préférence amené à coulisser et/ou à tourner par rapport à la soupape de distribution par un déplacement de l'articulation d'accouplement (20, 20').

5. Soupape de distribution selon la revendication 4, dans laquelle l'élément de commutation (22, 25) présente un chariot d'actionnement (25) coulissant par rapport à la soupape de distribution, ainsi qu'un élément d'articulation (22) qui relie de manière articulée l'articulation d'accouplement (20, 20') au chariot d'actionnement (25).

6. Soupape de distribution selon l'une quelconque des revendications 4 ou 5, qui présente un appareil (39) limitant la capacité de coulissement et/ou la capacité de rotation de l'élément de commutation (21, 22, 25), de telle sorte que l'élément de commutation (21, 22, 25) ne peut coulisser et/ou tourner que jusqu'à une position finale par un déplacement de l'articulation d'accouplement (20, 20'), l'articulation d'accouplement (20, 20') étant de préférence empêchée de tourner davantage autour du premier ou du deuxième axe de pivotement et/ou de coulisser davantage le long de la première ou de la deuxième direction après avoir atteint la position finale.

7. Soupape de distribution selon l'une quelconque des revendications 4 à 6, dans laquelle l'élément de commutation (21, 22, 25) est relié à un élément de rappel, l'élément de rappel favorisant ou rendant difficile un pivotement de l'élément d'accouplement (20, 20') autour du premier ou du deuxième axe de pivotement.

8. Soupape de distribution selon l'une quelconque des revendications 4 à 7, dans laquelle l'élément de commutation (21, 22, 25) est relié à un élément de rappel (40), l'élément de rappel (40) favorisant ou rendant difficile un coulissement de l'articulation d'accouplement (20, 20') dans la première ou la deuxième direction.

9. Soupape de distribution selon l'une quelconque des revendications 7 ou 8, dans laquelle l'élément de rappel est configuré pour pousser la soupape principale vers sa position de fermeture.

10. Soupape de distribution selon l'une quelconque des revendications 1 à 9, dans laquelle l'appareil d'accouplement (30) est configuré pour réaliser un verrouillage automatique entre le deuxième raccord de fluide (14) et la tubulure de raccordement (15) lors d'un coulissement du deuxième raccord de fluide (14) en direction de la tubulure de raccordement (15), le dispositif d'actionnement (17) étant configuré, lors d'un déplacement du levier manuel de la position d'ouverture vers la position de fermeture, pour d'actionner d'abord la soupape principale et libérer ensuite le verrouillage entre le deuxième raccord de fluide (14) et la tubulure de raccordement (15).

11. Soupape de distribution selon la revendication 10, dans laquelle le dispositif d'actionnement (17) présente un élément d'encliquetage (27) qui peut être encliqueté dans un élément d'encliquetage complémentaire (39) de l'appareil d'accouplement (30).

12. Soupape de distribution selon l'une quelconque des revendications 1 à 9, dans laquelle l'appareil d'accouplement (30) peut être mis en place sur la tubulure de raccordement par un coulissement du deuxième raccord de fluide (14) en direction de la tubulure de raccordement (15), le dispositif d'actionnement (17) étant configuré, après la mise en place de l'appareil d'accouplement (30) sur la tubulure de raccordement (15), lors d'un mouvement du levier manuel de la position de fermeture vers la position d'ouverture, pour établir d'abord un verrouillage entre le deuxième raccord de fluide (14) et la tubulure de raccordement (15) et pour actionner ensuite la soupape principale, notamment pour ouvrir la soupape principale.

13. Soupape de distribution selon l'une quelconque des revendications 1 à 12, dans laquelle le levier manuel (11) et l'articulation d'accouplement (20, 20') sont reliés l'un à l'autre de manière solidaire en rotation et de préférence d'un seul tenant.

14. Soupape de distribution selon l'une quelconque des revendications 1 à 13, dans laquelle l'appareil d'accouplement est configuré pour établir une liaison étanche aux fluides entre la tubulure de raccordement (15) et le deuxième raccord de fluide (14), la soupape de distribution étant de préférence configurée pour le remplissage sous pression du réservoir.

15. Distributeur pour distribuer un fluide, **caractérisé en ce qu'**il présente une soupape de distribution selon l'une quelconque des revendications 1 à 14.
